# EUROPEAN PATENT APPLICATION

(11) **EP 4 793 312 A1**
(43) Date of publication of application: **19.08.2026**
(21) Application number: 25158212.8
(22) Date of filing: 17.02.2025
(51) Int. Cl.: C08L 23/06, C08K 3/04, H01M 4/62, H01B 1/24

(54) **HIGHLY ELECTRICALLY CONDUCTIVE COMPOUNDS OF IMPROVED VISCOSITY AND IMPACT STRENGTH BALANCE FOR BATTERY ELECTRODE PLATES**

(71) Applicant: SHPP Global Technologies B.V., 4612 PX Bergen op Zoom (NL)
(72) Inventor: Silvi, Norberto, Selkirk, 12158 (US)
(74) Representative: Modiano, Gabriella Diana

(57) **Abstract**

Thermoplastic compositions include: (a) from about 35 wt% to about 70 wt% of a polymer resin including at least a first polyethylene polymer and a second polyethylene polymer that is different than the first polyethylene polymer; (b) from about 20 wt% to about 45 wt% of at least one graphite filler; and (c) from about 10 wt% to about 20 wt% of a carbon black filler. The composition has a steady-state capillary viscosity of between 400 and 620 Pa.s when observed at 280 °C and 1,000 1/s as evaluated using a multi-point method and a Kayeness capillary viscometer. The composition has notched Izod impact (NII) strength at 23 °C of at least 24 Joules per meter (J/m) or an unnotched Izod impact (UNII) strength at 23 °C of at least 135 J/m, wherein NII and UNII are evaluated in accordance with ASTM D256 and ASTM D4812.

## Description

### FIELD OF THE DISCLOSURE

The present disclosure relates to thermoplastic compositions including a combination of polyethylene polymers, and in particular to compositions including at least two polyethylene polymers, a graphite filler, and a carbon black filler. The compositions have good viscosity and impact strength properties.

### BACKGROUND OF THE DISCLOSURE

The search for carbon-plastic electrode composites to use as electrode plates in zinc bromide batteries started in the late 1970s. US Patent No. 4,169,816 (the "'816 Patent") by Exxon Research & Engineering, for example, describes a homogeneous blend of a crystalline polypropylene-ethylene copolymer, an electrically conductive carbon black, a small quantity of silica, and a fiber-reinforcing agent selected from carbon fibers and mixtures of carbon and glass fibers. A composition including 100 parts by weight (pbw) of the copolymer, 25 pbw carbon black, 5 pbw carbon fibers, 5 pbw glass fibers, and 1 pbw fumed silica was reported to have excellent strength, good extrudability, excellent volume electrical resistivity (1 Ohm.cm), and good impermeability.

The '816 Patent provides that to impart electrical conductivity, the composition should contain at least 15 parts by weight of a finely divided conductive carbon powder per hundred parts (pph) of the copolymer. It also states that 35 pph of the conductive carbon should not be employed; otherwise, the composition is too brittle and also less easily extrudable into thin nonporous sheets. Additionally, increasing the amount of carbon to about 35 pph tends to increase the permeability of the thin sheets manufactured from such compositions to liquids such as bromine, as an example. It was preferred that the finely divided conductive carbon black has a surface area greater than about 500 m²/g, such as those manufactured under the tradename Ketjenblack EC.

Johnson Controls began research into plastic-carbon electrodes in the 1990s, reporting at the time that the polypropylene-ethylene (EP) copolymer-based electrodes developed by Exxon were susceptible to oxidative attack, swelling and warpage. They explained that the mechanism behind the bromide attack was the vulnerability of tertiary hydrogens in the backbone of the propylene chain. In order to circumvent this problem Johnson Controls selected high density polyethylene (HDPE) homopolymer, which eliminates most, if not all, tertiary hydrogens on the backbone chain. Johnson Controls reported positive results in aging studies with the base polymer substitution; HDPE was superior to the EP Copolymer.

Globe-Union Inc. (a Johnson Controls subsidiary) patented HDPE-based carbon-plastic electrodes in December 1992. US Patent No. 5,173,362 (the " '362 Patent") described compositions for electrode systems, particularly those to be used for bipolar electrodes in zinc-bromine batteries. These compositions preferably included carbon black as a conductive filler in a polymeric matrix, with reinforcing materials such as glass fibers. The warpage of the zinc-bromine electrodes experienced in the prior art, and which was believed to be caused by physical expansion of the electrodes due to bromine absorption by the material of the electrode, was substantially eliminated in the compositions and fabrication processes described in this disclosure. In the '362 Patent, materials were prepared using a lamination process-known as glass-mat reinforced thermoplastics technology-or using a slurry process. Bromination, unlike chlorination, is extremely selective to the chemistry of the polymer matrix used, and the tertiary hydrogens of polypropylene systems react approximately twenty thousand times faster with bromine than the secondary hydrogens in polyethylene. Three carbon blacks were used in the compositions of this disclosure, but the Ketjenblack EC 300J grade offered the best combination of electrical conductivity and processability properties for the amount of carbon used.

The '362 Patent describes a broad range of carbon black (5-40 wt%) and fiber loading (10-70 wt%), although the example compositions include 18 wt% carbon loading (identical to those in the '816 Patent), so it is likely that the carbon and fiber loadings used in the '362 Patent are close to those described in the '816 Patent.

SABIC's International Application No. WO2022/195511 (the "'511 Publication") describes highly filled plastic materials that can replace titanium in electrode plates of zinc bromide batteries. These materials comprised at least one polyethylene (PE) and a mixture of synthetic graphite and conductive carbon black added in different ratios. Three desirable properties of these compounds are electrical conductivity, chemical resistance, and processability into thin plastic sheets using conventional polymer processing methods. The polymers used in the compositions of the '511 Publication were ethylene-hexene copolymers of medium to high density, having a chemical resistance (measured as environmental stress cracking resistance, ESCR) in 100% Igepal of at least 500 hours (ASTM D1693), a melt flow rate (MFR) at 190 °C and 21.60 kg of at least 10 g/10 min (ASTM D1238), and a degree of crystallinity of at least 45% when tested by differential scanning calorimetry (DSC). Synthetic, high purity graphites and carbon black powders of different particle sizes were used as fillers to impart electrical conductivity to the formulations of this publication. These PE-graphite-carbon compositions were injection molded into plaques, and also extruded into sheets of different thicknesses, which were used successfully to manufacture electrode plates of zinc-bromide batteries. Different polyethylenes, graphites and carbon powders were used in the formulations of the '511 Publication, but only specific grades and levels of these materials were found to be compatible with the requirements described above, namely electrical conductivity, chemical resistance, and processability into thin sheets using an extrusion conventional method.

In the '511 Publication it was found that the choice of polymer matrix was highly determinative of the chemical resistance of the composite material to the electrolyte solution used in the battery, with low density polyethylenes (LDPEs) showing, in general, a poor response to the environmental conditions encountered by the electrode plate material inside the battery. Research found that copolymers of high-density polyethylene and hexene of at least 45% crystallinity showed excellent resistance to zinc bromide at the relatively high operating temperatures of the battery. The graphites used in the compositions of the '511 Publication were highly crystalline materials of high purity and which were produced at ultrahigh temperatures that vaporize impurities such as metal oxides, sulfur, iron, aluminum, and many others to render 99%+ pure carbon synthetic graphite in particle sizes from less than 1 micron to several hundreds of microns. The carbon blacks used in the compositions of the '511 Publication had a primary/basic particle size of some 10-50 nanometers (nm), with aggregates of several hundreds of nanometers in size, and agglomerates as large as 100-200 microns (µm).

Table 1 of the '511 Publication includes a summary of the raw materials used in the compositions of the publication. A composition including 58 wt% FORMOLENE HL5010, 13 wt% Ketjenblack EC-300J and 29 wt% synthetic graphite TIMREX KS44 (composition Ex12 in Table 7A of the '511 Publication) has been commercialized as a STAT-KON^{™} formulation.

European Application No. 24181325.2, filed June 11, 2024 (the "'325 Application"), addressed the problem of developing an optimized version of the commercialized STAT-KON^{™} formulation having an improved balance of chemical resistance to the zinc bromide electrolyte solution, electrical conductivity, flow/processability and impact strength. A reference composition described in the '325 Application-composition C1.1 in Table 3-had the same composition as Ex12 in the '511 Publication.

In the '325 Application, flow improvement was achieved by replacing the highly electrically conductive Ketjenblack EC-300J carbon black-which has a small particle size and large specific surface area-with a less electrically conductive but more processable carbon black (Ensaco^{®} 250G from Imerys) which has a large particle size and small specific surface area. The results in the '325 Application showed that a resin including 19 wt% of the Ensaco 250G carbon black and all the HDPE in the form of Formolene HL5010 had a better balance of Izod impact strength, flow/processability and volume electrical resistivity compared with a resin containing only 13 wt% of Ketjenblack EC-300J and the same HDPE content.

Formulations including high density polyethylene and different types of carbon have been developed as described above, but none showed the balance of volume electrical resistivity, impact strength, chemical resistance, and processability required to manufacture wide, ductile, and thin sheets for battery bipolar electrode plates using a conventional sheet extrusion process.

These and other shortcomings are addressed by aspects of the present disclosure.

### SUMMARY

Aspects of the disclosure relate to thermoplastic compositions including: (a) from about 35 wt% to about 70 wt% of a polymer resin including at least a first polyethylene polymer and a second polyethylene polymer that is different than the first polyethylene polymer; (b) from about 20 wt% to about 45 wt% of at least one graphite filler; and (c) from about 10 wt% to about 20 wt% of a carbon black filler. The composition has a steady-state capillary viscosity of between 400 and 620 Pascal seconds (Pa.s) when observed at 280 °C and 1,000 1/s as evaluated using a multi-point method and a Kayeness capillary viscometer. The composition has notched Izod impact (NII) strength at 23 °C of at least 24 Joules per meter (J/m) or an unnotched Izod impact (UNII) strength at 23 °C of at least 135 J/m, wherein NII and UNII are evaluated in accordance with ASTM D256 and ASTM D4812. The combined weight percent value of all components does not exceed 100 wt%, and all weight percent values are based on the total weight of the composition.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.
FIG. 1 is a graph showing notched Izod impact strength properties for example and comparative compositions according to aspects of the disclosure.
FIG. 2 is a graph showing unnotched Izod impact strength properties for example and comparative compositions according to aspects of the disclosure.
FIG. 3 is a graph showing melt mass flow rate (MFR) properties for example and comparative compositions according to aspects of the disclosure.
FIG. 4 is a graph showing capillary viscosity properties for example and comparative compositions according to aspects of the disclosure.
FIG. 5 is a graph showing volume electrical resistivity properties for example and comparative compositions according to aspects of the disclosure.
FIG. 6 is a graph showing notched and unnotched Izod impact strength properties for further example and comparative compositions according to aspects of the disclosure.
FIG. 7 is a graph showing capillary viscosity properties for further example and comparative compositions according to aspects of the disclosure.
FIG. 8 is a graph showing volume electrical resistivity properties for further example and comparative compositions according to aspects of the disclosure.

### DETAILED DESCRIPTION

The present disclosure relates to thermoplastic compositions having improved flow and processability; these properties are achieved by replacing higher molecular weight (low flow) polyethylene in conventional compositions with a lower molecular weight (high flow) polyethylene resin having improved flow but otherwise a similar degree of crystallinity compared to the conventional polyethylene resin. The thermoplastic compositions described herein included at least two different polyethylene resins, carbon black and synthetic graphite.

The highly filled thermoplastic compositions described herein may replace titanium in electrode bipolar plates of zinc bromide redox batteries for energy storage. The compositions include a combination of synthetic graphite and conductive carbon black dispersed in a mixture of polyethylenes having similar crystallinity but different molecular weights. Desirable properties for the compositions described herein may include, but are not limited to, electrical conductivity, chemical resistance, impact strength, and processability into thin plastic sheets using conventional polymer processing equipment. The compositions offer an improved balance of flow/processability and impact strength as compared to conventional compositions.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a graphite filler" includes mixtures of two or more graphite fillers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "Mₙ" can be used interchangeably, and refer to the statistical average molecular weight of all the polymer chains in the sample and is defined by the formula: ${M}_{n} = \frac{\sum {N}_{i} {M}_{i}}{\sum {N}_{i}} ,$ where Mᵢ is the molecular weight of a chain and Nᵢ is the number of chains of that molecular weight. Mₙ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "M_{w}" can be used interchangeably, and are defined by the formula: ${M}_{w} = \frac{\sum {N}_{i} {{M}_{i}}^{2}}{\sum {N}_{i} {M}_{i}} ,$ where Mᵢ is the molecular weight of a chain and Nᵢ is the number of chains of that molecular weight. Compared to Mₙ, M_{w} takes into account the molecular weight of a given chain in determining contributions to the molecular weight average. Thus, the greater the molecular weight of a given chain, the more the chain contributes to the M_{w}. M_{w} can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula: $PDI = \frac{{M}_{w}}{{M}_{n}} .$ The PDI has a value equal to or greater than 1, but as the polymer chains approach uniform chain length, the PDI approaches unity.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: (a) from about 35 wt% to about 70 wt% of a polymer resin including at least a first polyethylene polymer and a second polyethylene polymer that is different than the first polyethylene polymer; (b) from about 20 wt% to about 45 wt% of at least one graphite filler; and (c) from about 10 wt% to about 20 wt% of a carbon black filler. The composition has a steady-state capillary viscosity of between 400 and 620 Pascal seconds (Pa.s) when observed at 280 °C and 1,000 1/s as evaluated using a multi-point method and a Kayeness capillary viscometer. The composition has notched Izod impact (NII) strength at 23 °C of at least 24 Joules per meter (J/m) or an unnotched Izod impact (UNII) strength at 23 °C of at least 135 J/m, wherein NII and UNII are evaluated in accordance with ASTM D256 and ASTM D4812. The combined weight percent value of all components does not exceed 100 wt%, and all weight percent values are based on the total weight of the composition.

In some aspects one or both of the first polyethylene polymer and the second polyethylene polymer include high density polyethylene.

In specific aspects the composition includes: (a) from about 10 wt% to about 50 wt% of the first polyethylene polymer, the first polyethylene polymer having a melt flow rate (MFR) of less than 200 grams per 10 minutes (g/10 min) as evaluated at 190 °C with a 10 kilogram (kg) force according to ASTM D1238; and b) from about 10 wt% to about 50 wt% of the second polyethylene polymer, the second polyethylene polymer having a MFR of greater than 200 g/10 min as evaluated at 190 °C with a 10 kg force according to ASTM D1238.

In further aspects the composition includes at least 10 wt%, or at least 12 wt%, or at least 14 wt%, or at least 16 wt%, or at least 18 wt%, or at least 20 wt%, or at least 22 wt%, or at least 24 wt%, or at least 25 wt%, or at least 26 wt%, or at least 28 wt%, or at least 30 wt%, or at least 32 wt%, or at least 34 wt%, or at least 36 wt%, or at least 38 wt%, or at least 40 wt%, or at least 42 wt%, or at least 44 wt%, or at least 46 wt%, or at most 50 wt%, or at most 48 wt%, or at most 46 wt%, or at most 44 wt%, or at most 42 wt%, or at most 40 wt%, or at most 38 wt%, or at most 36 wt%, or at most 34 wt%, or at most 32 wt%, or at most 30 wt%, or at most 28 wt%, or at most 26 wt%, or at most 24 wt%, of the first polyethylene polymer.

In particular aspects the composition includes at least 10 wt%, or at least 12 wt%, or at least 14 wt%, or at least 16 wt%, or at least 18 wt%, or at least 20 wt%, or at least 22 wt%, or at least 24 wt%, or at least 25 wt%, or at least 26 wt%, or at least 28 wt%, or at least 30 wt%, or at least 32 wt%, or at least 34 wt%, or at least 36 wt%, or at least 38 wt%, or at least 40 wt%, or at most 50 wt%, or at most 48 wt%, or at most 46 wt%, or at most 44 wt%, or at most 42 wt%, or at most 40 wt%, or at most 38 wt%, or at most 36 wt%, or at most 34 wt%, or at most 32 wt%, or at most 30 wt%, or at most 28 wt%, or at most 26 wt%, or at most 24 wt%, or at most 22 wt%, or at most 20 wt%, of the second polyethylene polymer.

In certain aspects one or both of the first polyethylene polymer and the second polyethylene polymer have a degree of crystallinity of at least 55% as evaluated by differential scanning calorimetry (DSC). In other aspects one or both of the first polyethylene polymer and the second polyethylene polymer have a degree of crystallinity of at least 56%, or at least 57%, or at least 58%, or at least 59%, or at least 60%, or at least 61%, or at least 62%, or at least 63%, or at least 64%, or at least 65%, or at least 66%, or at least 67%, or at least 68%, or at least 69%, or at least 70%, or at least 71%, or at most 90%, or at most 85%, or at most 80%, or at most 75%.

In some aspects first polyethylene polymer has a MFR of from 25-100 g/10 min as evaluated at 190 °C with a 10 kg force according to ASTM D1238. In further aspects the second polyethylene polymer has a MFR of from 200-800 g/10 min as evaluated at 190 °C with a 10 kg force according to ASTM D1238.

The composition may include a weight percent ratio of the first polyethylene polymer to the second polyethylene polymer of from 3.5:1 to 1:3.5, including 3.4:1, 3.2:1, 3:1, 2.8:1, 2.6:1, 2.4:1, 2.2:1, 2:1, 1.8:1, 1.6:1, 1.4:1, 1.2:1, 1:1, 1:1.2, 1:1.4, 1:1.6, 1:1.8, 1:2, 1:2.2, 1:2.4, 1:2.6, 1:2.8, 1:3, 1:3.2, 1:3.4, 1:3.5, and ranges within these ratios.

In certain aspects the second polyethylene polymer has a capillary viscosity of less than 250 pascal-seconds (Pa.s), or less than 240 Pa.s, or less than 230 Pa.s, or less than 220 Pa.s, or less than 210 Pa.s, or less than 200 Pa.s, or less than 190 Pa.s, or less than 180 Pa.s, or less than 170 Pa.s, or less than 160 Pa.s, or at least 100 Pa.s, or at least 110 Pa.s, or at least 120 Pa.s, or at least 130 Pa.s, or at least 140 Pa.s, or at least 150 Pa.s, as evaluated at 190 °C and a shear rate of 1000 inverse seconds (1/s) as evaluated using a multi-point method and a Kayeness capillary viscometer.

In specific aspects each of the first polyethylene polymer and the second polyethylene polymer have a density of at least 0.935 grams per cubic centimeter (g/cm³), or at least 0.936 g/cm³, or at least 0.937 g/cm³, or at least 0.938 g/cm³, or at least 0.939 g/cm³, or at least 0.940 g/cm³, or at least 0.941 g/cm³, or at least 0.942 g/cm³, or at least 0.943 g/cm³, or at least 0.944 g/cm³, or at least 0.945 g/cm³, or at least 0.946 g/cm³, or at least 0.947 g/cm³, or at least 0.948 g/cm³, or at least 0.949 g/cm³, or at least 0.950 g/cm³, or at least 0.951 g/cm³, or at least 0.952 g/cm³, or at most 0.960 g/cm³, or at most 0.959 g/cm³, or at most 0.958 g/cm³, or at most 0.957 g/cm³, or at most 0.956 g/cm³, as evaluated in accordance with ASTM D792.

Suitable first (low flow/high molecular weight) polyethylene polymers include Formolene^{®} HL5010 (available from Formosa Plastics) and Marlex^{®} HHM 4903 (available from Chevron Phillips Chemical). Suitable second (high flow/low molecular weight) polyethylene polymers include Marlex^{®} HMN 6060 (available from Chevron Phillips Chemical) and Formolene^{®} DLH5420P (available from Formosa Plastics). Properties of these polyethylene polymers are provided in the Examples section.

In some aspects the carbon black filler has a Brunauer-Emmett-Teller (BET) surface area of greater than 400 square meters per gram (m²/g), or at least 425 m²/g, or at least 450 m²/g, or at least 475 m²/g, or at least 500 m²/g, or at least 525 m²/g, or at least 550 m²/g, or at least 575 m²/g, or at least 600 m²/g, or at least 625 m²/g, or at least 650 m²/g, or at least 675 m²/g, or at least 700 m²/g, or at least 725 m²/g, or at least 750 m²/g, or at least 775 m²/g, or at most 1000 m²/g, or at most 950 m²/g, or at most 900 m²/g, or at most 850 m²/g, as evaluated according to ASTM D3037.

Suitable carbon black fillers include, but are not limited to, Ketjenblack EC-300J, Ensaco^{™} 350G, and Vulcan^{®} XCmax^{™} 22. Ketjenblack EC-300J is available from Nouryon. Ensaco^{™} 350G is available from Imerys. Vulcan^{®} XCmax^{™} 22 is available from Cabot. Properties of these carbon black fillers are provided in the Examples section.

The composition includes from about 10 wt% to about 20 wt% of the carbon black filler. In some aspects the composition includes at least 10 wt%, or at least 11 wt%, or at least 12 wt%, or at least 13 wt%, or at least 14 wt%, or at least 15 wt%, or at least 16 wt%, or at least 17 wt%, or at least 18 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, of the carbon black filler.

The at least one graphite filler may be a synthetic graphite in some aspects. A suitable synthetic graphite filler is Timrex^{®} KS44 graphite, available from Imerys.

The composition includes from about 20 wt% to about 45 wt% of at least one graphite filler. In further aspects the composition includes at least 20 wt%, or at least 21 wt%, or at least 22 wt%, or at least 23 wt%, or at least 24 wt%, or at least 25 wt%, or at least 26 wt%, or at least 27 wt%, or at least 28 wt%, or at least 29 wt%, or at least 30 wt%, or at least 31 wt%, or at least 32 wt%, or at least 33 wt%, or at least 34 wt%, or at least 35 wt%, or at least 36 wt%, or at least 37 wt%, or at least 38 wt%, or at least 39 wt%, or at least 40 wt%, or at most 45 wt%, or at most 44 wt%, or at most 43 wt%, or at most 42 wt%, or at most 41 wt%, or at most 40 wt%, or at most 39 wt%, or at most 38 wt%, or at most 37 wt%, or at most 36 wt%, or at most 35 wt%, or at most 34 wt%, or at most 33 wt%, or at most 32 wt%, or at most 31 wt%, or at most 30 wt%, of the at least one graphite filler.

In some aspects the composition includes at least one or more additional additives. The one or more additional additives include, but are not limited to: an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

The one or more additional additive, if present, may be included in the composition in an amount of from greater than 0 wt% (e.g., 0.001 wt%) to about 5 wt%. In certain aspects the amount of the one or more additional additive is limited to an amount that does not interfere with the chemistry of the electrolyte solution of the article in which it is included (e.g., a battery), which could reduce the resin's chemical resistance.

Compositions according to aspects of the disclosure may have a capillary viscosity of from 400 to 650 Pa.s at 280 °C and a shear rate of 1,000 1/s as evaluated using a multi-point method and Kayeness capillary viscometer. In certain aspects the composition has a capillary viscosity of at least 400 Pa.s, or at least 410 Pa.s, or at least 420 Pa.s, or at least 430 Pa.s, or at least 440 Pa.s, or at least 450 Pa.s, or at least 460 Pa.s, or at least 470 Pa.s, or at least 480 Pa.s, or at least 490 Pa.s, or at least 500 Pa.s, or at least 510 Pa.s, or at least 520 Pa.s, or at least 530 Pa.s, or at least 540 Pa.s, or at least 550 Pa.s, or at least 560 Pa.s, or at least 570 Pa.s, or at least 580 Pa.s, or at least 590 Pa.s, or at least 600 Pa.s, or at least 610 Pa.s, or at least 620 Pa.s, or at least 630 Pa.s, or at most 650 Pa.s, or at most 640 Pa.s, or at most 630 Pa.s, or at most 620 Pa.s, or at most 610 Pa.s, or at most 600 Pa.s, or at most 590 Pa.s, or at most 580 Pa.s, or at most 570 Pa.s, or at most 560 Pa.s, or at most 550 Pa.s, or at most 540 Pa.s, or at most 530 Pa.s, or at most 520 Pa.s, or at most 510 Pa.s, or at most 500 Pa.s, or at most 490 Pa.s, or at most 480 Pa.s, or at most 470 Pa.s, or at most 460 Pa.s, or at most 450 Pa.s, at 280 °C and a shear rate of 1,000 1/s as evaluated using a multi-point method and Kayeness capillary viscometer.

In some aspects the composition has a notched Izod impact (NII) strength of at least 24 J/m at 23 °C as evaluated in accordance with ASTM D256 and ASTM D4812. In certain aspects the composition has a NII strength of at least 25 J/m, or at least 27 J/m, or at least 29 J/m, or at least 31 J/m, or at least 33 J/m, or at least 35 J/m, or at least 37 J/m, or at least 39 J/m, or at least 41 J/m, or at least 43 J/m, or at least 45 J/m, or at least 47 J/m, or at least 49 J/m, or at least 51 J/m, or at least 53 J/m, or at least 55 J/m, or at least 57 J/m, or at least 59 J/m, or at most 70 J/m, or at most 68 J/m, or at most 66 J/m, or at most 64 J/m, or at most 62 J/m, or at most 60 J/m, or at most 58 J/m, or at most 56 J/m, or at most 54 J/m, or at most 52 J/m, or at most 50 J/m, at 23 °C as evaluated in accordance with ASTM D256 and ASTM D4812.

In further aspects the composition has an unnotched Izod impact (UNII) strength of at least 135 J/m at 23 °C as evaluated in accordance with ASTM D256 and ASTM D4812. In particular aspects the composition has an UNII strength of at least 135 J/m, or at least 145 J/m, or at least 155 J/m, or at least 165 J/m, or at least 175 J/m, or at least 185 J/m, or at least 195 J/m, or at least 205 J/m, or at least 215 J/m, or at least 225 J/m, or at least 235 J/m, or at least 245 J/m, or at least 255 J/m, or at least 265 J/m, or at least 275 J/m, or at least 285 J/m, or at least 295 J/m, or at least 305 J/m, or at least 315 J/m, or at least 325 J/m, or at most 380 J/m, or at most 370 J/m, or at most 360 J/m, or at most 350 J/m, or at most 340 J/m, or at most 330 J/m, or at most 320 J/m, or at most 310 J/m, or at most 300 J/m, at 23 °C as evaluated in accordance with ASTM D256 and ASTM D4812.

In specific aspects the composition has a volume electrical resistivity of less than 1.0 Ohm-centimeters (Ohm.cm) as evaluated according to ASTM D991 on a 4 inch x 5 inch x .125 inch plaque. In further aspects the composition has a volume electrical resistivity of less than 0.95 Ohm.cm, or less than 0.90 Ohm.cm, or less than 0.85 Ohm.cm, or less than 0.80 Ohm.cm, or less than 0.75 Ohm.cm, or less than 0.70 Ohm.cm, or less than 0.65 Ohm.cm, or less than 0.60 Ohm.cm, or less than 0.55 Ohm.cm, or less than 0.50 Ohm.cm, or less than 0.45 Ohm.cm, or less than 0.40 Ohm.cm, or less than 0.35 Ohm.cm, or less than 0.30 Ohm.cm, or at least 0.10 Ohm.cm, or at least 0.15 Ohm.cm, or at least 0.20 Ohm.cm, or at least 0.25 Ohm.cm, or at least 0.30 Ohm.cm, or at least 0.35 Ohm.cm, or at least 0.40 Ohm.cm, or at least 0.45 Ohm.cm, or at least 0.50 Ohm.cm, as evaluated according to ASTM D991 on a 4 inch x 5 inch x .125 inch plaque.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, compression molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion formed. In a still further aspect, the article is injection molded.

In particular aspects the article is a sheet for use in a bipolar electrode plate of an energy storage battery. In specific aspects the sheet has a thickness of 1 millimeter (mm) or less. The compositions described herein may also be useful in articles of plate-and-frame heat exchangers in which heat is transferred from hot media to cold media.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a) from about 35 wt% to about 70 wt% of a polymer resin comprising at least a first polyethylene polymer and a second polyethylene polymer that is different than the first polyethylene polymer;
b) from about 20 wt% to about 45 wt% of at least one graphite filler; and
c) from about 10 wt% to about 20 wt% of a carbon black filler,
wherein
the composition has a steady-state capillary viscosity of between 400 and 620 Pascal seconds (Pa.s) when observed at 280 °C and 1,000 1/s as evaluated using a multi-point method and a Kayeness capillary viscometer,
the composition has notched Izod impact (NII) strength at 23 °C of at least 24 Joules per meter (J/m) or an unnotched Izod impact (UNII) strength at 23 °C of at least 135 J/m, wherein NII and UNII are evaluated in accordance with ASTM D256 and ASTM D4812, and
the combined weight percent value of all components does not exceed 100 wt%, and all weight percent values are based on the total weight of the composition.

Aspect 2. The thermoplastic composition according to Aspect 1, wherein one or both of the first polyethylene polymer and the second polyethylene polymer comprise high density polyethylene.

Aspect 3. The thermoplastic composition according to Aspect 1 or 2, wherein the composition comprises:
a-1) from about 10 wt% to about 50 wt% of the first polyethylene polymer, wherein the first polyethylene polymer has a melt flow rate (MFR) of less than 200 grams per 10 minutes (g/10 min) as evaluated at 190 °C with a 10 kilogram (kg) force according to ASTM D1238; and
a-2) from about 10 wt% to about 50 wt% of the second polyethylene polymer, wherein the second polyethylene polymer has a MFR of greater than 200 g/10 min as evaluated at 190 °C with a 10 kg force according to ASTM D1238.

Aspect 4. The thermoplastic composition according to any one of Aspects 1 to 3, wherein the composition comprises:
a-1) from about 25 wt% to about 40 wt% of the first polyethylene polymer, wherein the first polyethylene polymer has a melt flow rate (MFR) of less than 200 grams per 10 minutes (g/10 min) as evaluated at 190 °C with a 10 kilogram (kg) force according to ASTM D1238;
a-2) from about 10 wt% to about 40 wt% of the second polyethylene polymer, wherein the second polyethylene polymer has a MFR of greater than 200 g/10 min as evaluated at 190 °C with a 10 kg force according to ASTM D1238,
b) from about 20 wt% to about 45 wt% of the at least one graphite filler; and
c) from about 14 wt% to about 20 wt% of the carbon black filler.

Aspect 5. The thermoplastic composition according to Aspect 4, wherein:
the composition has a steady-state capillary viscosity of between 450 and 600 Pascal seconds (Pa.s) when observed at 280 °C and 1,000 1/s as evaluated using a multi-point method and a Kayeness capillary viscometer; and
the composition has notched Izod impact (NII) strength at 23 °C of at least 29 Joules per meter (J/m) or an unnotched Izod impact (UNII) strength at 23 °C of at least 165 J/m, wherein NII and UNII are evaluated in accordance with ASTM D256 and ASTM D4812.

Aspect 6. The thermoplastic composition according to any one of Aspects 1 to 5, wherein one or both of the first polyethylene polymer and the second polyethylene polymer have a degree of crystallinity of at least 55% as evaluated by differential scanning calorimetry (DSC).

Aspect 7. The thermoplastic composition according to any one of Aspects 1 to 6, wherein
the first polyethylene polymer has a MFR of from 25-100 g/10 min as evaluated at 190 °C with a 10 kg force according to ASTM D1238, or
the second polyethylene polymer has a MFR of from 200-800 g/10 min as evaluated at 190 °C with a 10 kg force according to ASTM D1238.

Aspect 8. The thermoplastic composition according to any one of Aspects 1 to 7, wherein the composition comprises a weight percent ratio of the first polyethylene polymer to the second polyethylene polymer of from 3:1 to 1:3.

Aspect 9. The thermoplastic composition according to any one of Aspects 1 to 8, wherein the second polyethylene polymer has a capillary viscosity of less than 250 pascal-seconds (Pa.s) as evaluated at 190 °C and a shear rate of 1000 inverse seconds (1/s) as evaluated using a multi-point method and a Kayeness capillary viscometer.

Aspect 10. The thermoplastic composition according to any one of Aspects 1 to 9, wherein the carbon black filler has a Brunauer-Emmett-Teller (BET) surface area of greater than 400 square meters per gram (m²/g) as evaluated according to ASTM D3037.

Aspect 11. The thermoplastic composition according to any one of Aspects 1 to 10, wherein the composition has a capillary viscosity of from 420 to 620 Pa.s at 280 °C and a shear rate of 1,000 1/s as evaluated using a multi-point method and Kayeness capillary viscometer.

Aspect 12. The thermoplastic composition according to any one of Aspects 1 to 11, wherein the composition has a volume electrical resistivity of less than 1.0 Ohm-centimeters (Ohm.cm) as evaluated according to ASTM D991 on a 4 inch x 5 inch x .125 inch plaque.

Aspect 13. The thermoplastic composition according to any one of Aspects 1 to 12, wherein each of the first polyethylene polymer and the second polyethylene polymer have a density of at least 0.935 grams per cubic centimeter (g/cm³) as evaluated in accordance with ASTM D792.

Aspect 14. An article comprising the thermoplastic composition according to any one of Aspects 1 to 13.

Aspect 15. The article according to Aspect 14, wherein the article is a sheet for use in a bipolar electrode plate of an energy storage battery.

Aspect 16. The article according to Aspect 15, wherein the sheet has a thickness of 1 millimeter (mm) or less.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Carbon black powders used in one or more of the compositions described herein are listed in Table 1 with selected properties:

**Table 1 - Carbon Black Powders**

| | | | **Ketjenblack EC-300J** | **Ensaco^{™} 350G** | **Vulcan^{®} XCmax^{™} 22** |
|---|---|---|---|---|---|
| **Property** | **Standard** | **Unit** | | | |
| Brunauer-Emmett-Teller (BET) specific surface area (SSA) | ASTM D3037 | m²/g | 800 | 770 | >450* |
| Oil absorption number (OAN) | ASTM D2414 | ml/100g | 310-345 | 320 | 320 |
| Ash content | ASTM D1506 | wt% | < 0.05 | 0.03 | |
| Pour density | ASTM D1513 | kg/m³ | 125-145 | 135 | 190 |
| Iodine absorption | ASTM D1510 | mg/g | 740-840 | 860 | 1360 |
| Sulfur content | ASTM D1619 | wt% | | 0.02 | |
| Volatiles | ASTM D1203 | wt% | ~ 0.4 | ~ 0.2 | |

| | | | | | |
|---|---|---|---|---|---|
| * Estimated | | | | | |

Ketjenblack EC-300J is available from Nouryon. Ensaco^{™}, 350G is available from Imerys. Vulcan^{®} XCmax^{™} 22 is available from Cabot.

A product information sheet for the Vulcan^{®} XCmax^{™} 22 carbon black is available from Cabot ("Cabot Vulcan^{®} XCmax^{™} 22 Product Information Sheet"). The SSA is not published, but it is estimated to be at least 450 m²/g based on the following data and analysis. According to Ali Khan, "Installation and operation of autosorb-1-C-8 for BET surface area measurement of porous materials," 12/2010 ("Ali Khan NPL"), the SSA of a Vulcan XC72 (also available from Cabot) is about 223 m²/g (Ali Khan NPL, p. 16, FIG. 12). Comparing the percolation curves for Vulcan^{®} XCmax^{™} 22 vs XC72 (see the Cabot Vulcan^{®} XCmax^{™} 22 Product Information Sheet), it is seen that it takes only about 50% of XCmax^{™} 22 as compared to XC72 to achieve the same volume electrical resistivity. Additionally, the values of Iodine Number and OAN of XCmax^{™} 22 are comparable to those of Ketjenblack EC-300J and Ensaco 350G. Accordingly, it is apparent that the specific surface area of XCmax^{™} 22 should be larger than that of XC72. From this data, it is estimated that the SSA of the Vulcan^{®} XCmax^{™} 22 carbon black is conservatively at least 450 m²/g.

The high density polyethylene resins used in one or more of the compositions described herein are listed in Table 2 with selected properties:

**Table 2- HDPE Resins**

| | Degree of crystallinity (%) | MFR, 190 °C, 10 kg (g/10 min) | Capillary viscosity at 190 °C, 1000 1/s (Pa.s) |
|---|---|---|---|
| Formolene^{®} HL5010 | 71.1 | 41.7 | 381.2 |
| Marlex^{®} HHM 4903 | 59.8 | 30.4 | 274.9 |
| Marlex^{®} HMN 6060 | 71.5 | 261 | 220.9 |
| Formolene^{®} DLH5420P | 63.2 | 624 | 150.6 |

Degree of crystallinity were evaluated by differential scanning calorimetry (DSC). Melt flow rate (MFR) was evaluated at 190 °C with a 10 kilogram (kg) force according to ASTM D1238. Capillary viscosity was evaluated at 190 °C and a shear rate of 1000 1/s as evaluated using a multi-point method and Kayeness capillary viscometer. The Formolene^{®} resins are available from Formosa Plastics. The Marlex^{®} resins are available from Chevron Phillips Chemical.

Of note is the lower capillary viscosity of the Marlex^{®} HMN 6060 and Formolene^{®} DLH5420P resins compared to the Formolene^{®} HL5010 and Marlex^{®} HHM 4903 controls. Additional properties for these HDPE resins are provided in Table 3:

**Table 3 - Properties of HDPE Resins**

| | | | Formolene^{®} HL5010 | Marlex^{®} HHM 4903 | Marlex^{®} HMN 6060 | Formolene^{®} DLH5420P |
|---|---|---|---|---|---|---|
| Density | | - | 0.9544 | 0.943 | 0.9498 | 0.9458 |
| Specific Gravity | | - | 0.9572 | 0.9458 | 0.9527 | 0.9486 |
| | | | | | | |
| DSC | | | | | | |
| | Heat of Fusion/Melting | J/g | 208.3 | 175.1 | 209.4 | 185.2 |
| | Degree of Crystallization | % | 71.1 | 59.8 | 71.5 | 63.2 |
| | | | | | | |
| MFR | | | | | | |
| | 190 °C, 2.16 kg | g/10 min | No Flow | No Flow | 8.24 | 24.7 |
| | 190 °C, 10 kg | g/10 min | 41.7 | 30.4 | 261 | 624 |
| | | | | | | |
| Capillary viscosity at 190 °C | | | | | | |
| | 100 1/s | Pa·s | 1584.9 | 1949.9 | 631.6 | 320.7 |
| | 500 1/s | Pa·s | 601.4 | 584.1 | 317 | 199.7 |
| | 1000 1/s | Pa·s | 381.2 | 274.9 | 220.9 | 150.6 |
| | 1500 1/s | Pa·s | 270.8 | 204.4 | 174.5 | 123.4 |
| | 3000 1/s | Pa·s | 124.4 | 141.5 | 112.7 | 84.8 |
| | 5000 1/s | Pa·s | 90.8 | 109 | 79.9 | 62.4 |

Density and specific gravity were evaluated according to ASTM D792. DSC evaluated heat of fusion/melting. MFR was evaluated at 190 °C using a 2.16 kg force or a 10 kg force as indicated. Capillary viscosity was evaluated at 190 °C using a multi-point method and Kayeness capillary viscometer at the indicated shear rate.

The synthetic graphite used in the compositions of this disclosure was highly crystalline Timrex^{®} KS44, which has a specific surface area (SSA) of about 9 m²/g, a D90 particle size of 44.8 micron as evaluated by laser diffraction.

Example and comparative compositions were prepared as shown in Table 4A:

**Table 4A - Comparative and Example Compositions**

| | | **C1.1** | **Ex1.1** | **Ex1.2** | **Ex1.3** | **Ex1.4** | **Ex1.5** | **Ex1.6** | **C1.2** |
|---|---|---|---|---|---|---|---|---|---|
| | | | | | | | | | |
| **HDPE** | | | | | | | | | |
| | Formolene^{®} HL5010 | 58 | 42.75 | 28 | 14 | 42.75 | 28 | 14 | |
| | Formolene^{®} DLH5420P | | 14.25 | 28 | 42 | | | | |
| | Marlex^{®} HMN 6060 | | | | | 14.25 | 28 | 42 | 56 |
| | | | | | | | | | |
| **Carbon Black** | | | | | | | | | |
| | Ketjenblack EC-300J | 13 | | | | | | | |
| | Ensaco^{™} 350G | | 14 | 15 | 15 | 14 | 15 | 15 | 15 |
| **Graphite** | | | | | | | | | |
| | Timrex^{®} KS44 | 29 | 29 | 29 | 29 | 29 | 29 | 29 | 29 |
| | | | | | | | | | |
| | | | | | | | | | |
| Polymer (HDPE) | | 58 | 57 | 56 | 56 | 57 | 56 | 56 | 56 |
| Carbon Black | | 13 | 14 | 15 | 15 | 14 | 15 | 15 | 15 |
| Graphite | | 29 | 29 | 29 | 29 | 29 | 29 | 29 | 29 |
| **Total (wt%)** | | 100 | 100 | 100 | 100 | 100 | 100 | 100 | 100 |

In the example compositions including two HDPEs, the ratios of low flow to high flow HDPE was maintained at 3:1 (Ex1.1, Ex1.4), 1:1 (Ex1.2, Ex1.5), and 1:3 (Ex1.3, Ex1.6).

Various properties of the Table 4A compositions were evaluated; results are shown in Table 4B:

**Table 4B - Properties of Table 4A Compositions**

| **Property** | **Unit** | **C1.1** | **Ex1.1** | **Ex1.2** | **Ex1.3** | **Ex1.4** | **Ex1.5** | **Ex1.6** | **C1.2** |
|---|---|---|---|---|---|---|---|---|---|
| NII, 23 °C | J/m | 57 | 58.1 | 35.7 | 25.2 | 60.9 | 40.1 | 28.2 | 22.5 |
| UNII, 23 °C | J/m | 257 | 354 | 260 | 174 | 282 | 230 | 175 | 136 |
| MFR, 280 °C, 21.6 kg | g/10 min | No flow | 6.1 | 11.7 | 30.3 | 4.31 | 7.31 | 9.35 | 22.6 |
| CV, 100 1/s | Pa.s | 3292 | 2813 | 2413 | 1869 | 3029 | 2754 | 2400 | 1962 |
| CV, 500 1/s | Pa.s | 1137 | 920 | 809 | 639 | 981 | 908 | 794 | 650 |
| CV, 1000 1/s | Pa.s | 672 | 550 | 499 | 402 | 592 | 554 | 483 | 406 |
| CV, 1500 1/s | Pa.s | 450 | 390 | 368 | 303 | 427 | 394 | 356 | 306 |
| CV, 3000 1/s | Pa.s | 226 | | 218 | 159 | 218 | 212 | 213 | 186 |
| CV, 5000 1/s | Pa.s | | | 136 | 126 | 137 | | 135 | 126 |
| VR | Ohm.cm | 0.401 | 0.484 | 0.373 | 0.397 | 0.446 | 0.346 | 0.321 | 0.325 |

Notched and unnotched Izod impact strength (NII, UNII) were evaluated at 23 °C in accordance with ASTM D256 and ASTM D4812; results are shown in Joules per meter (J/m). Melt flow rate (melt mass flow rate, MFR) was evaluated according to ASTM D1238 using a Global Test Method at 280 °C and with a 21.6 kg force. Capillary viscosity (CV) was evaluated at 280 °C and the indicated shear rates using a multi-point method and Kayeness capillary viscometer. Volume electrical resistivity (VR) was evaluated according to ASTM D991 on 4 inch x 5 inch x .125 inch plaques. As the results of Table 4B showed, the addition of a high flow (low viscosity) HDPE, either Formolene^{®} DLH5420P or Marlex^{®} HMN 6060 to Formolene^{®} HL5010 in different ratios decreased the viscosity of the compound, with increasing amounts of the high flow resin added leading to lower and lower viscosities of the resulting compound.

Tables 4A and 4B show compositions including Ensaco^{™} 350G carbon black, Timrex^{®} KS44, and combinations of Formolene^{®} HL5010 and either Formolene^{®} DLH5420P or Marlex^{®} HMN6060 in different wt% amounts. Composition C1.1 including 58 wt% of Formolene^{®} HL5010, 13 wt% of Ketjenblack EC-300J and 29 wt% of synthetic graphite Timrex^{®} KS44 is a comparative composition which has been commercialized as noted above.

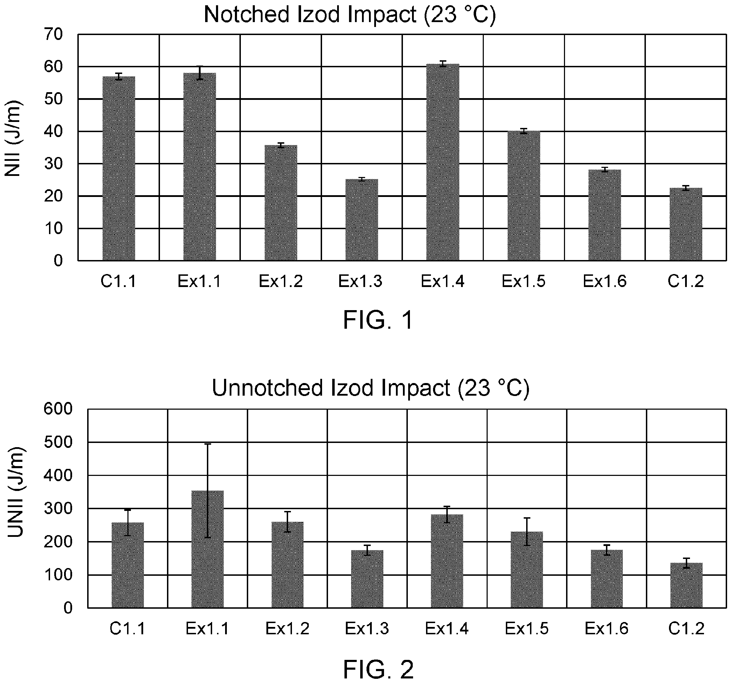

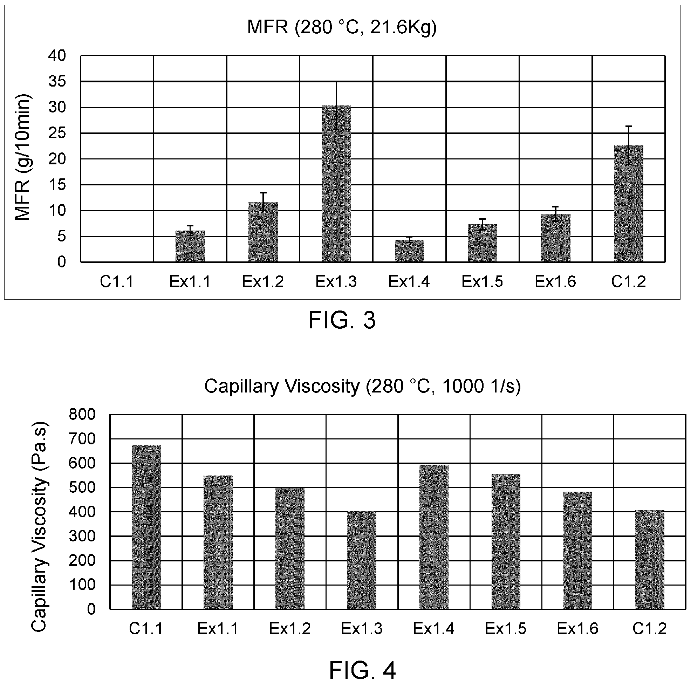

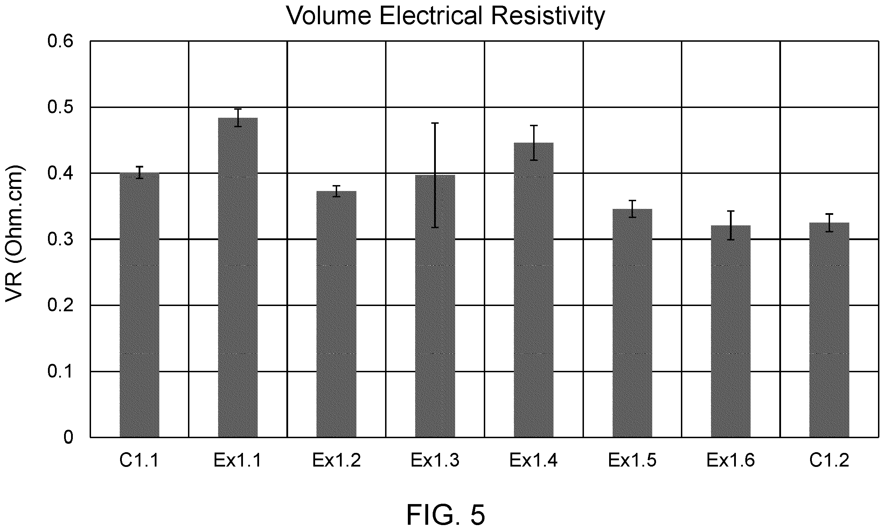

Example compositions Ex1.1 through Ex1.6 all had a capillary viscosity at 280 °C and a shear rate of 1,000 1/sec of between 400 and 620 Pa.s. They also had a NII at 23 °C of at least 24 J/m and a UNII at 23 °C of at least 135 J/m. The volume electrical resistivity of each of these compositions was below 1 Ohm.cm. The comparative compositions C1.1 and C1.2 included only one HDPE resin and had one or more properties outside the values discussed above for the example compositions. For example, C1.2 had a NII below 24 J/m and UNII below 135 J/m, and C1.1 had a capillary viscosity above 620 Pa.s. FIGS. 1-5 show the properties of these compositions in graphical form.

Additional example and comparative compositions were prepared as shown in Table 5A:

**Table 5A - Comparative and Example Compositions**

| | | **C2.1** | **Ex2.1** | **Ex2.2** |
|---|---|---|---|---|
| | | | | |
| **HDPE** | | | | |
| | Marlex^{®} HHM 4903 | 56 | 28 | 14 |
| | Formolene^{®} DLH5420P | | 28 | 42 |
| | | | | |
| **Carbon Black** | | | | |
| | Ensaco^{™} 350G | 15 | 15 | 15 |
| **Graphite** | | | | |
| | Timrex^{®} KS44 | 29 | 29 | 29 |
| | | | | |
| | | | | |
| Polymer (HDPE) | | 56 | 56 | 56 |
| Carbon Black | | 15 | 15 | 15 |
| Graphite | | 29 | 29 | 29 |
| **Total (wt%)** | | 100 | 100 | 100 |

Various properties of the Table 5A compositions were evaluated; results are shown in Table 5B:

**Table 5B - Properties of Table 5A Compositions**

| **Property** | **Unit** | **C2.1** | **Ex2.1** | **Ex2.2** |
|---|---|---|---|---|
| NII, 23 °C | J/m | 51.7 | 29.1 | 24.8 |
| UNII, 23 °C | J/m | 237 | 170 | 138 |
| MFR, 280 °C, 21.6 kg | g/10 min | No flow | No flow | No flow |
| CV, 100 1/s | Pa.s | 4847 | 3295 | 2765 |
| CV, 500 1/s | Pa.s | 1407 | 1004 | 847 |
| CV, 1000 1/s | Pa.s | 771 | 595 | 506 |
| CV, 1500 1/s | Pa.s | 510 | 436 | 373 |
| CV, 3000 1/s | Pa.s | 262 | 234 | 218 |
| VR | Ohm.cm | 0.478 | 0.428 | 0.42 |

The compositions in Tables 5A and 5B included 15 wt% Ensaco^{™} 350G carbon black, 29 wt% Timrex^{®} KS44 graphite, and combinations of Marlex^{®} HHM 4903 and Formolene^{®} DLH5420P with different wt% content. Composition C2.1 included 56wt% of one HDPE (Marlex^{®} HHM 4903), 15 wt% of Ensaco^{™} 350G and 29 wt% Timrex^{®} KS44 and was a control composition. Example composition Ex2.1 had a capillary viscosity at 280 °C and shear rate of 1,000 1/sec between 400 and 620 Pa.s, a NII impact strength at 23 °C of at least 24 J/m, and a UNII impact strength at 23 °C of at least 135 J/m. Example composition Ex2.2 included less than 20 wt% of the lower MFR HDPE (Marlex^{®} HHM 4903) and had lower NII and UNII properties, but they were still at least 24 J/m and 135 J/m, respectively. As the results of Table 5B show, the addition of high flow (low viscosity) HDPE Formolene^{®} DLH5420P to Marlex^{®} HHM 4903 in different ratios decreased the viscosity of the compound, with increasing amounts of the high flow resin added leading to lower and lower viscosities of the resulting compound. The total amount of HDPE, both high flow and low flow, added to the composition was kept constant at a value of 56 wt%. These results highlight that judiciously selecting the combination of low flow and high flow HDPEs, both in type and loading can simultaneously meet the specifications of resin viscosity at 280 °C and 1,000 1/s, and impact strength, in terms of both, IZOD notched and un-notched at 23 °C.

Further example and comparative compositions were prepared as shown in Tables 6A and 6B:

**Table 6A - Comparative and Example Compositions**

| | | **C3.1** | **C3.2** | **C3.3** | **Ex3.1** | **Ex3.2** |
|---|---|---|---|---|---|---|
| | | | | | | |

| **HDPE** | | | | | | |
|---|---|---|---|---|---|---|
| | Formolene^{®} HL5010 | 58 | 58 | 58 | 28 | 28 |
| | Formolene^{®} DLH5420P | | | | 28 | 28 |

| **Carbon Black** | | | | | | |
|---|---|---|---|---|---|---|
| | Ketjenblack EC-300J | 13 | | | 15 | |
| | Ensaco^{™} 350G | | 13 | | | 15 |
| | Cabot Vulcan XCmax 22 | | | 13 | | |

| **Graphite** | | | | | | |
|---|---|---|---|---|---|---|
| | Timrex^{®} KS44 | 29 | 29 | 29 | 29 | 29 |
| | | | | | | |
| | | | | | | |
| Polymer (HDPE) | | 58 | 58 | 58 | 56 | 56 |
| Carbon Black | | 13 | 13 | 13 | 15 | 15 |
| Graphite | | 29 | 29 | 29 | 29 | 29 |
| **Total (wt%)** | | 100 | 100 | 100 | 100 | 100 |

**Table 6B - Comparative and Example Compositions**

| | | **Ex3.3** | **Ex3.4** | **Ex3.5** | **Ex3.6** | **Ex3.7** |
|---|---|---|---|---|---|---|
| | | | | | | |

| **HDPE** | | | | | | |
|---|---|---|---|---|---|---|
| | Formolene^{®} HL5010 | 28 | 28.5 | 34.2 | 42.75 | 29.5 |
| | Formolene^{®} DLH5420P | 28 | 28.5 | 22.8 | 14.25 | 29.5 |
| | | | | | | |

| **Carbon Black** | | | | | | |
|---|---|---|---|---|---|---|
| | Ketjenblack EC-300J | | | | | |
| | Ensaco^{™} 350G | | | | | |
| | Vulcan^{®} XCmax^{™} 22 | 15 | 14 | 14 | 14 | 12 |

| **Graphite** | | | | | | |
|---|---|---|---|---|---|---|
| | Timrex^{®} KS44 | 29 | 29 | 29 | 29 | 29 |
| | | | | | | |
| | | | | | | |
| Polymer (HDPE) | | 56 | 57 | 57 | 57 | 59 |
| Carbon Black | | 15 | 14 | 14 | 14 | 12 |
| Graphite | | 29 | 29 | 29 | 29 | 29 |
| **Total (wt%)** | | 100 | 100 | 100 | 100 | 100 |

Various properties of the Table 6A and 6B compositions were evaluated; results are shown in Tables 6C and 6D:

**Table 6C - Properties of Table 6A Compositions**

| **Property** | **Unit** | **C3.1** | **C3.2** | **C3.3** | **Ex3.1** | **Ex3.2** |
|---|---|---|---|---|---|---|
| NII, 23 °C | J/m | 56.4 | 63.7 | 72.5 | 30.4 | 30.8 |
| UNII, 23 °C | J/m | 436 | 371 | 401 | 198 | 253 |
| Specific gravity | - | 1.226 | 1.227 | 1.227 | 1.247 | 1.246 |
| MFR, 280 °C, 21.6 kg | g/10 min | No flow | No flow | No flow | 5.33 | 10.2 |
| MVR, 280 °C, 21.6 kg | cm³/ 10 min | No Flow | No flow | No flow | 4.79 | 9.21 |
| CV, 100 1/s | Pa.s | 3810 | 3548 | 3592 | 2597 | 2375 |
| CV, 500 1/s | Pa.s | 1243 | 1152 | 1171 | 848 | 810 |
| CV, 1000 1/s | Pa.s | 700 | 653 | 643 | 513 | 491 |
| CV, 1500 1/s | Pa.s | 488 | 457 | 438 | 380 | 362 |
| CV, 3000 1/s | Pa.s | 252 | 239 | 215 | 226 | 212 |
| CV, 5000 1/s | Pa.s | 149 | 144 | 122 | 152 | 140 |
| VR | Ohm.cm | 0.497 | 0.654 | 0.53 | 0.292 | 0.391 |

**Table 6D - Properties of Table 6B Compositions**

| **Property** | **Unit** | **Ex3.3** | **Ex3.4** | **Ex3.5** | **Ex3.6** | **Ex3.7** |
|---|---|---|---|---|---|---|
| NII, 23 °C | J/m | 30.5 | 30.1 | 35.2 | 48.2 | 32.2 |
| UNII, 23 °C | J/m | 207 | 221 | 238 | 276 | 261 |
| Specific gravity | - | 1.243 | 1.236 | 1.237 | 1.235 | 1.221 |
| MFR, 280 °C, 21.6 kg | g/10 min | No flow | 5.46 | 3.67 | No flow | 15.7 |
| MVR, 280 °C, 21.6 kg | cm³/ 10 min | No flow | 4.91 | 3.31 | No flow | 14.1 |
| CV, 100 1/s | Pa.s | 2860 | 2509 | 2769 | 3182 | 1965 |
| CV, 500 1/s | Pa.s | 940 | 840 | 918 | 1049 | 682 |
| CV, 1000 1/s | Pa.s | 559 | 505 | 547 | 606 | 422 |
| CV, 1500 1/s | Pa.s | 407 | 371 | 400 | 431 | 317 |
| CV, 3000 1/s | Pa.s | 232 | 216 | 229 | 232 | 192 |
| CV, 5000 1/s | Pa.s | 151 | 142 | 150 | 143 | 132 |
| VR | Ohm.cm | 0.321 | 0.412 | 0.406 | 0.396 | 0.712 |

Specific gravity was evaluated in accordance with ASTM D792. Melt volume flow rate (MVR) was evaluated according to ASTM D1238 using a Global Test Method at 280 °C and with a 21.6 kg force.

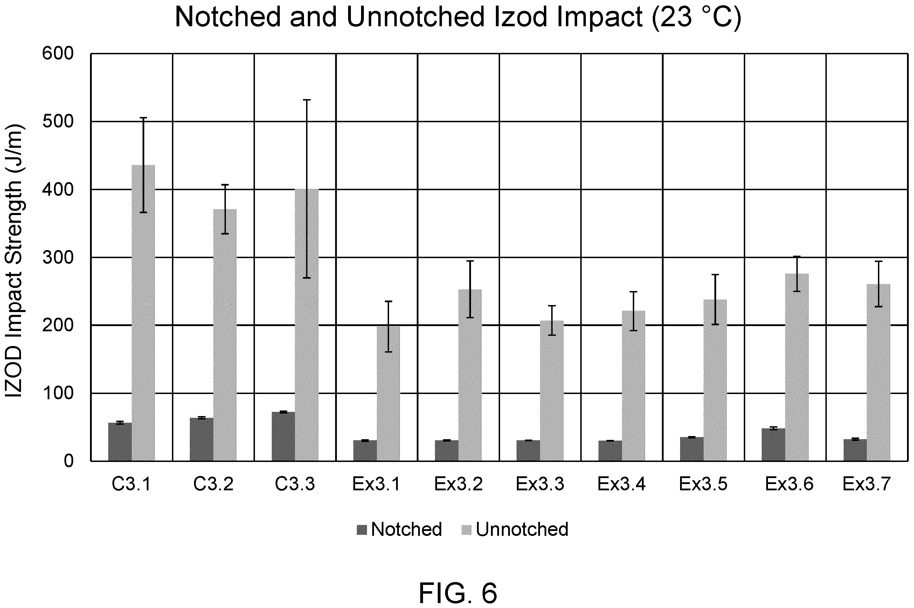

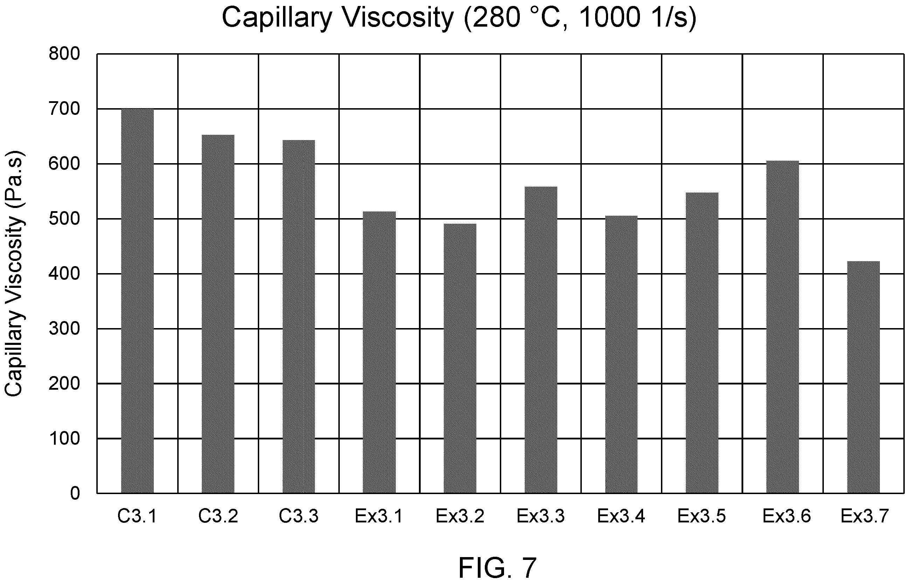

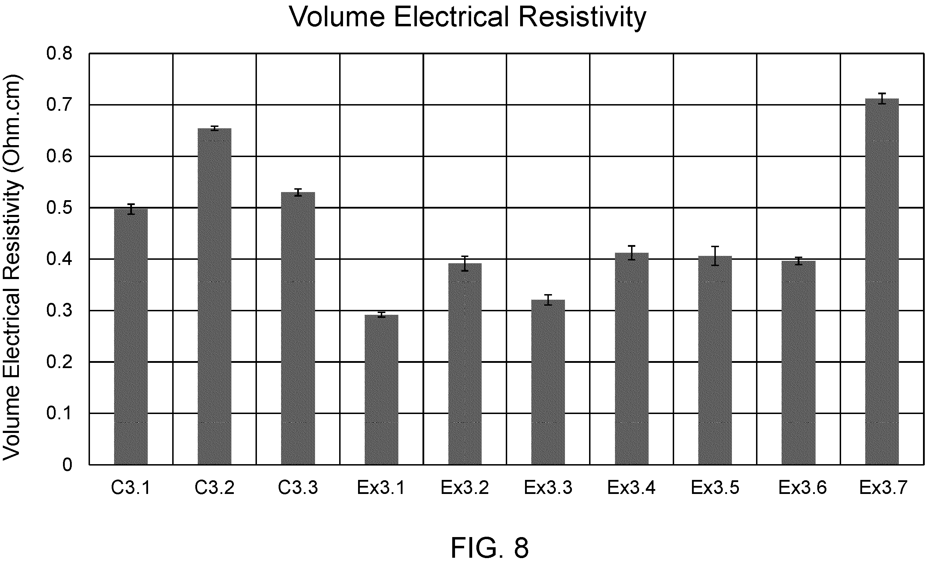

The compositions of Tables 6A-6D included 12-15 wt% carbon black, 29 wt% graphite, and combinations of Formolene^{®} HL5010 and Formolene^{®} DLH5420P in different wt% amounts. Compositions C3.1-C3.3 included only one lower MFR HDPE (Formolene^{®} HL5010) and are comparative compositions. Compositions Ex3.1-Ex.3.7 are example compositions. FIGS. 6-8 show the properties of these compositions in graphical form.

These results showed that all the compositions of Tables 6A and 6B met the specification of Izod impact strength (notched > 24 J/m and unnotched > 135 J/m) at 23 °C. However, only example compositions Ex3.1 to Ex3.7 satisfied both of the Izod impact strength and capillary viscosity (400 to 620 Pa.s at 280 °C and 1,000 1/s) properties.

## Claims

1. A thermoplastic composition comprising:
a) from about 35 wt% to about 70 wt% of a polymer resin comprising at least a first polyethylene polymer and a second polyethylene polymer that is different than the first polyethylene polymer;
b) from about 20 wt% to about 45 wt% of at least one graphite filler; and
c) from about 10 wt% to about 20 wt% of a carbon black filler,
wherein
the composition has a steady-state capillary viscosity of between 400 and 620 Pascal seconds (Pa.s) when observed at 280 °C and 1,000 1/s as evaluated using a multi-point method and a Kayeness capillary viscometer,
the composition has notched Izod impact (NII) strength at 23 °C of at least 24 Joules per meter (J/m) or an unnotched Izod impact (UNII) strength at 23 °C of at least 135 J/m, wherein NII and UNII are evaluated in accordance with ASTM D256 and ASTM D4812, and
the combined weight percent value of all components does not exceed 100 wt%, and all weight percent values are based on the total weight of the composition.

2. The thermoplastic composition according to claim 1, wherein one or both of the first polyethylene polymer and the second polyethylene polymer comprise high density polyethylene.

3. The thermoplastic composition according to claim 1 or 2, wherein the composition comprises:
a-1) from about 10 wt% to about 50 wt% of the first polyethylene polymer, wherein the first polyethylene polymer has a melt flow rate (MFR) of less than 200 grams per 10 minutes (g/10 min) as evaluated at 190 °C with a 10 kilogram (kg) force according to ASTM D1238; and
a-2) from about 10 wt% to about 50 wt% of the second polyethylene polymer, wherein the second polyethylene polymer has a MFR of greater than 200 g/10 min as evaluated at 190 °C with a 10 kg force according to ASTM D1238.

4. The thermoplastic composition according to any one of claims 1 to 3, wherein the composition comprises:
a-1) from about 25 wt% to about 40 wt% of the first polyethylene polymer, wherein the first polyethylene polymer has a melt flow rate (MFR) of less than 200 grams per 10 minutes (g/10 min) as evaluated at 190 °C with a 10 kilogram (kg) force according to ASTM D1238;
a-2) from about 10 wt% to about 40 wt% of the second polyethylene polymer, wherein the second polyethylene polymer has a MFR of greater than 200 g/10 min as evaluated at 190 °C with a 10 kg force according to ASTM D1238,
b) from about 20 wt% to about 45 wt% of the at least one graphite filler; and
c) from about 14 wt% to about 20 wt% of the carbon black filler.

5. The thermoplastic composition according to claim 4, wherein:
the composition has a steady-state capillary viscosity of between 450 and 600 Pascal seconds (Pa.s) when observed at 280 °C and 1,000 1/s as evaluated using a multi-point method and a Kayeness capillary viscometer; and
the composition has notched Izod impact (NII) strength at 23 °C of at least 29 Joules per meter (J/m) or an unnotched Izod impact (UNII) strength at 23 °C of at least 165 J/m, wherein NII and UNII are evaluated in accordance with ASTM D256 and ASTM D4812.

6. The thermoplastic composition according to any one of claims 1 to 5, wherein one or both of the first polyethylene polymer and the second polyethylene polymer have a degree of crystallinity of at least 55% as evaluated by differential scanning calorimetry (DSC).

7. The thermoplastic composition according to any one of claims 1 to 6, wherein
the first polyethylene polymer has a MFR of from 25-100 g/10 min as evaluated at 190 °C with a 10 kg force according to ASTM D1238, or
the second polyethylene polymer has a MFR of from 200-800 g/10 min as evaluated at 190 °C with a 10 kg force according to ASTM D1238.

8. The thermoplastic composition according to any one of claims 1 to 7, wherein the composition comprises a weight percent ratio of the first polyethylene polymer to the second polyethylene polymer of from 3:1 to 1:3.

9. The thermoplastic composition according to any one of claims 1 to 8, wherein the second polyethylene polymer has a capillary viscosity of less than 250 pascal-seconds (Pa.s) as evaluated at 190 °C and a shear rate of 1000 inverse seconds (1/s) as evaluated using a multi-point method and a Kayeness capillary viscometer.

10. The thermoplastic composition according to any one of claims 1 to 9, wherein the carbon black filler has a Brunauer-Emmett-Teller (BET) surface area of greater than 400 square meters per gram (m²/g) as evaluated according to ASTM D3037.

11. The thermoplastic composition according to any one of claims 1 to 10, wherein the composition has a capillary viscosity of from 420 to 620 Pa.s at 280 °C and a shear rate of 1,000 1/s as evaluated using a multi-point method and Kayeness capillary viscometer.

12. The thermoplastic composition according to any one of claims 1 to 11, wherein the composition has a volume electrical resistivity of less than 1.0 Ohm-centimeters (Ohm.cm) as evaluated according to ASTM D991 on a 4 inch x 5 inch x .125 inch plaque.

13. The thermoplastic composition according to any one of claims 1 to 12, wherein each of the first polyethylene polymer and the second polyethylene polymer have a density of at least 0.935 grams per cubic centimeter (g/cm³) as evaluated in accordance with ASTM D792.

14. An article comprising the thermoplastic composition according to any one of claims 1 to 13, wherein the article is a sheet for use in a bipolar electrode plate of an energy storage battery.

15. The article according to claim 14, wherein the sheet has a thickness of 1 millimeter (mm) or less.
